# EUROPEAN PATENT APPLICATION

(11) **EP 4 775 974 A1**
(43) Date of publication of application: **15.07.2026**
(21) Application number: 24896957.8
(22) Date of filing: 21.06.2024
(51) Int. Cl.: G01N 27/62, H01J 49/04

(54) **SAMPLE SUPPORT**

(30) Priority: 29.11.2023 JP 2023201583
(71) Applicant: Hamamatsu Photonics K.K., Hamamatsu-shi, Shizuoka 435-8558 (JP)
(72) Inventor: IKEDA, Takamasa, Hamamatsu-shi, Shizuoka 435-8558 (JP)
(74) Representative: Grünecker Patent- und Rechtsanwälte PartG mbB
(86) International application number: PCT/JP2024/022624
(87) International publication number: WO 2025/115265

(57) **Abstract**

A sample support includes a substrate having a first surface, a second surface opposite to the first surface, a side surface connecting an edge of the first surface and an edge of the second surface, and voids distributed so as to open to at least the first surface and the side surface. The substrate is formed of a plurality of particles connected to each other. An outer surface of at least a part of a plurality of side surface particles constituting the side surface among the plurality of particles is a rough surface on which an uneven structure is formed.

## Description

### Technical Field

The present disclosure relates to a sample support.

### Background Art

As a sample support used for ionizing a sample, a sample support including a porous substrate having a main surface and a side surface is known (see, for example, Patent Literature 1). The porous substrate of such a sample support includes voids that are irregularly distributed and open to the main surface. According to the sample support, it is possible to appropriately adjust the amount of the sample remaining on the main surface of the porous substrate and suitably ionize the components of the sample.

### Citation List

### Patent Literature

[Patent Literature 1] JP 2022-43571 A

### Summary of Invention

### Technical Problem

In the sample support as described above, high accuracy in sample analysis is required, and ease of use (handling property) of the sample support during analysis work is also required.

An object of the present disclosure is to provide a sample support capable of achieving high accuracy in analysis and improving handling property.

### Solution to Problem

The present disclosure includes sample supports of [1] to [8].
[1] A sample support for ionizing a sample, including: a porous substrate having a first surface, a second surface opposite to the first surface, a side surface connecting an edge of the first surface and an edge of the second surface, and voids distributed so as to open to at least the first surface and the side surface, wherein the porous substrate is formed of a plurality of particles connected to each other, and an outer surface of at least a part of a plurality of side surface particles constituting the side surface among the plurality of particles is a rough surface on which an uneven structure is formed.

In the sample support of [1] described above, the porous substrate includes voids opening to the first surface. Thereby, when the sample is introduced to the first surface of the porous substrate, the sample appropriately diffuses into the voids of the porous substrate, and the amount of the sample remaining on the first surface is appropriately adjusted. As a result, the sample remaining on the first surface can be suitably ionized. In addition, the voids of the porous substrate also open to the side surface. Thereby, for example, when the sample support in which the sample is transferred to the first surface of the sample support is introduced into a vacuum apparatus, degassing of the porous substrate (that is, discharging of the gas accumulated in the voids from the side surface) can be suitably performed. In addition, even when the sample is transferred to the entire first surface, the gas introduced from the first surface into the inside of the substrate can escape from the opening of the side surface, so that it is possible to suppress accumulation of extra gas (residual gas) inside the porous substrate, and consequently suppress occurrence of transfer unevenness caused by the residual gas. Furthermore, an outer surface of at least a part of the side surface of the porous substrate is a rough surface on which an uneven structure is formed. Thereby, for example, when an operator holds the side surface of the porous substrate with fingers, or when the side surface of the porous substrate is held using an instrument for supporting the sample support, the rough surface exhibits an anti-slip function, so that the handling property of the sample support can be improved. As described above, according to the sample support, it is possible to achieve high accuracy in analysis and improve handling property.

[2] The sample support according to [1], wherein at least a part of the plurality of side surface particles has a non-rough surface on which the uneven structure is not formed on a side opposite to the rough surface.

According to the sample support of [2] described above, by making the inner surface of the side surface particles a non-rough surface, sufficient bonding strength between the side surface particles and the particles located inside the side surface particles can be secured, and spilling of the side surface particles or the like can be suppressed. In addition, by not providing the uneven structure inside the side surface particles, compared to a case where the uneven structure is also formed inside the side surface particles, gas flow (for example, the above-described residual gas flow) inside the side surface particles can be smoothed, and consequently degassing from the opening of the side surface can be suitably performed.

[3] The sample support according to [1] or [2], wherein at least a part of the plurality of side surface particles is formed of a substance that emits ions in response to being irradiated with an energy ray.

[4] The sample support according to any one of [1] to [3], wherein a substance that emits ions in response to being irradiated with an energy ray is disposed on the rough surface of at least a part of the plurality of side surface particles.

According to the sample support of [3] or [4] described above, in an imaging result (hereinafter referred to as an "MSI image") obtained by irradiating the first surface of the sample support with an energy ray, ionizing components (molecules) of the sample present on the first surface, and performing mass spectrometry imaging (MSI) that two-dimensionally visualizes a spatial distribution of the ionized components, a portion corresponding to the side surface of the porous substrate (that is, an outer edge of the sample support) can be clarified. More specifically, since the rough surface is provided with the uneven structure (edge structure), the energy of the energy ray is easily absorbed by an edge portion of the rough surface. As a result, the components of the substance at the edge portion are suitably ionized and easily desorbed, and as a result, a location corresponding to the outer edge of the sample support can be easily and accurately recognized in the MSI image. Furthermore, in the sample support of [4] described above, since ionization on the surface of the edge portion is more suitably performed, the location corresponding to the outer edge of the sample support can be more easily and accurately recognized in the MSI image.

[5] The sample support according to any one of [1] to [4], further including a conductive layer provided on a surface of the porous substrate, wherein the conductive layer includes a first conductive region provided on the first surface so as not to block the openings of the voids on the first surface, and a second conductive region connected to the first conductive region and provided on the side surface so as not to block the openings of the voids on the side surface, and the second conductive region is provided along a surface shape of the uneven structure on the rough surface of at least a part of the plurality of side surface particles.

When ionizing the components of the sample remaining on the first surface by irradiation with an energy ray (for example, a laser desorption/ionization method or the like), it is necessary to apply a voltage to the conductive layer (first conductive region) on the first surface. In order to stably apply a voltage to the first conductive region, it is preferable to apply a voltage also to the side surface, and it is preferable to provide the second conductive region on the side surface. Then, since the second conductive region is provided along the surface shape of the uneven structure on the rough surface of at least a part of the plurality of side surface particles, the same effect as in [4] described above can be obtained.

[6] The sample support according to [5], wherein a thickness of the conductive layer in the second conductive region is smaller than a thickness of the conductive layer in the first conductive region.

According to the sample support of [6] described above, by securing a constant thickness for the first conductive region on the first surface, a voltage can be stably applied to the first surface during analysis. On the other hand, for the second conductive region on the side surface, by reducing the thickness of the conductive layer, the same effect as in [4] described above can be obtained even more suitably.

[7] The sample support according to [5] or [6], wherein the first surface has a rectangular shape, and the conductive layer is not provided in portions corresponding to four corners of the first surface.

According to the sample support of [7] described above, by not providing the conductive layer in the portions corresponding to the four corners of the first surface, it becomes easy to visually distinguish a portion where the conductive layer is provided on the first surface from the portions corresponding to the four corners of the first surface. Thereby, for example, when aligning a stage in a state where the sample support is placed on the stage of a mass spectrometer, the alignment can be facilitated by using the portions corresponding to the four corners of the first surface as marks.

[8] The sample support according to any one of [1] to [7], wherein the side surface includes an inclined region that inclines so as to spread outward from the first surface toward the second surface.

According to the sample support of [8] described above, it is possible to improve the stability of the sample support when the sample support is placed on a sample stage or the like during analysis.

### Advantageous Effects of Invention

According to the present disclosure, it is possible to provide a sample support capable of achieving high accuracy in analysis and improving handling property.

### Brief Description of Drawings

FIG. 1 is a perspective view of a sample support of an embodiment.
FIG. 2 is a cross-sectional view of the sample support taken along line II-II shown in FIG. 1.
FIG. 3 is a schematic diagram showing a part of a porous structure on a first surface side of a porous substrate shown in FIG. 1.
FIG. 4 is a schematic diagram showing a part of the porous structure on a side surface side of the porous substrate shown in FIG. 1.
FIG. 5 is an SEM image of a region A shown in FIG. 1.
FIG. 6 is an SEM image of a region B shown in FIG. 1.
FIG. 7 is a diagram showing a part of a third step of a mass spectrometry method of an embodiment.
FIG. 8 is a configuration diagram of a mass spectrometer that performs the mass spectrometry method of the embodiment.
FIG. 9 is a schematic diagram for explaining effects of the sample support shown in FIG. 1.
FIG. 10 is a diagram showing MSI images and camera images of a boundary portion of a comparative example (left part) and an example (right part).

### Description of Embodiments

Hereinafter, embodiments of the present invention will be described in detail with reference to the drawings. In the drawings, the same or corresponding parts are denoted by the same reference numerals, and redundant description will be omitted. In addition, in the drawings, some parts are exaggerated in order to easily explain characteristic parts according to the embodiments. Therefore, the dimensional ratio of each part in the drawings may be different from the actual dimensional ratio.

### [Sample Support]

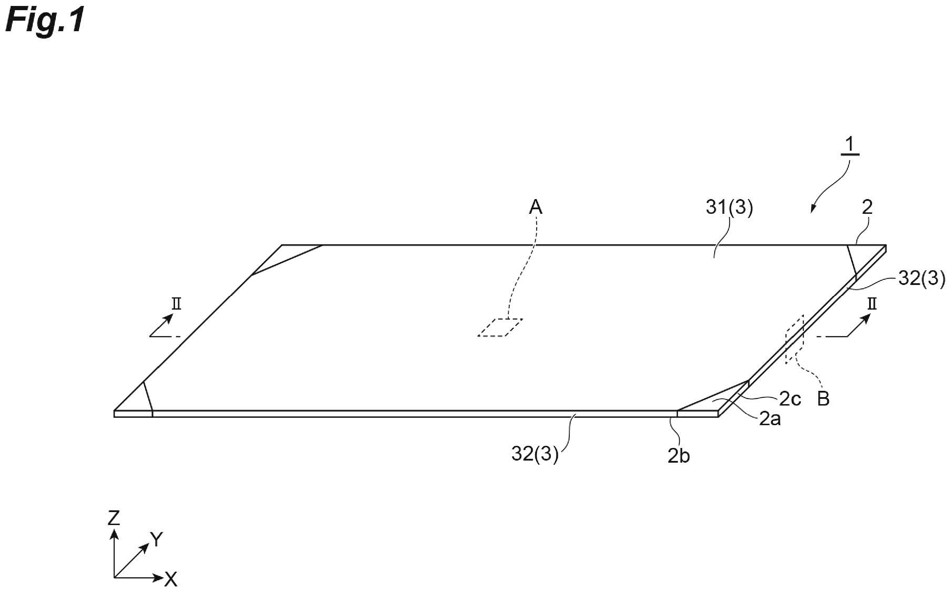

A sample support 1 shown in FIGS. 1 to 4 is used for ionizing a sample. The sample contains, for example, a liquid component, and specific examples thereof include a biological sample, a slice of a fruit (for example, a strawberry or the like), and the like. The sample support 1 includes a substrate (porous substrate) 2 and a conductive layer 3.

The substrate 2 has a first surface 2a, a second surface 2b opposite to the first surface 2a, and a side surface 2c connecting an edge of the first surface 2a and an edge of the second surface 2b. As an example, the substrate 2 is formed in a rectangular plate shape. The thickness of the substrate 2 (distance from the first surface 2a to the second surface 2b) is, for example, about 100 µm to 1500 µm. In the present specification and drawings, for convenience, a thickness direction of the substrate 2 (that is, a direction in which the first surface 2a and the second surface 2b face each other) is represented as a Z-axis direction, one direction orthogonal to the Z-axis direction (longitudinal direction of the substrate 2) is represented as an X-axis direction, and a direction orthogonal to the Z-axis direction and the X-axis direction (transverse direction of the substrate 2) is represented as a Y-axis direction.

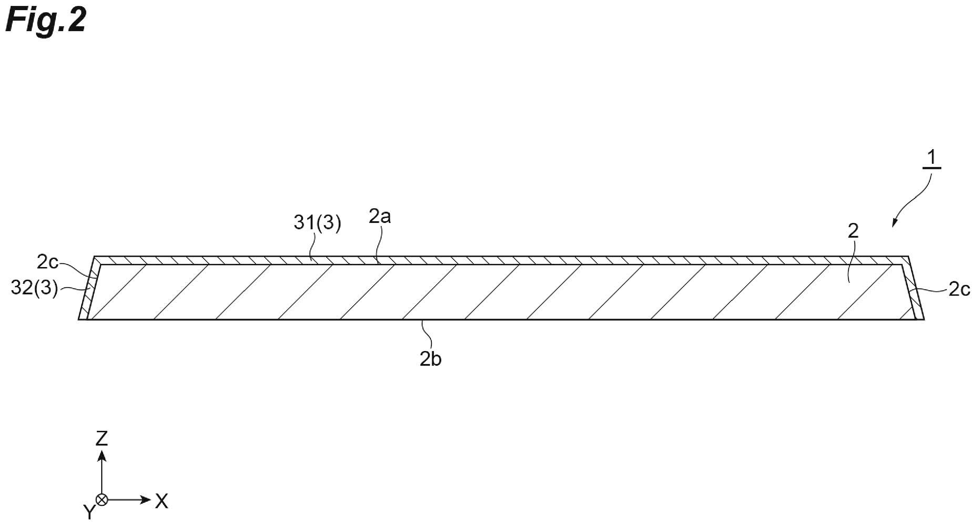

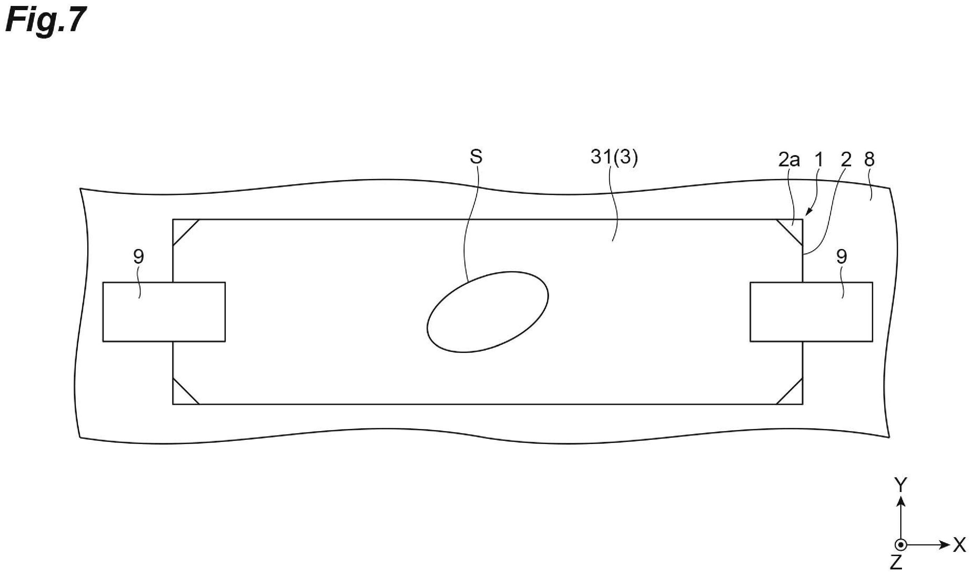

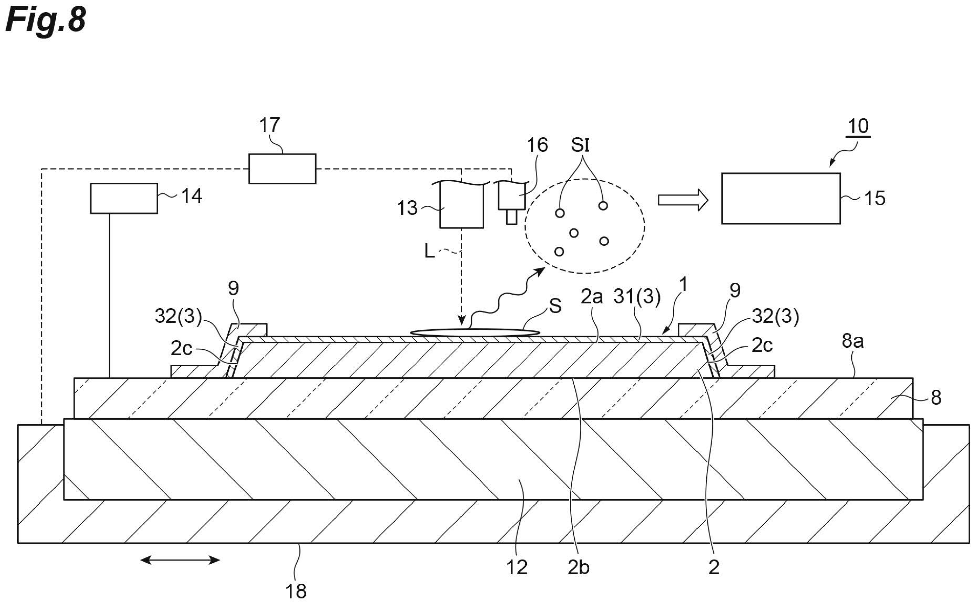

The first surface 2a is a surface on which a sample S to be analyzed (see FIGS. 7 and 8) is arranged (transferred). The second surface 2b is a surface placed on a predetermined sample stage (as an example, a support substrate 8 shown in FIGS. 7 and 8). As shown in FIG. 2, the side surface 2c includes an inclined region that inclines so as to spread outward from the first surface 2a toward the second surface 2b. In the present embodiment, the entire side surface 2c is an inclined region that inclines in a tapered shape as described above.

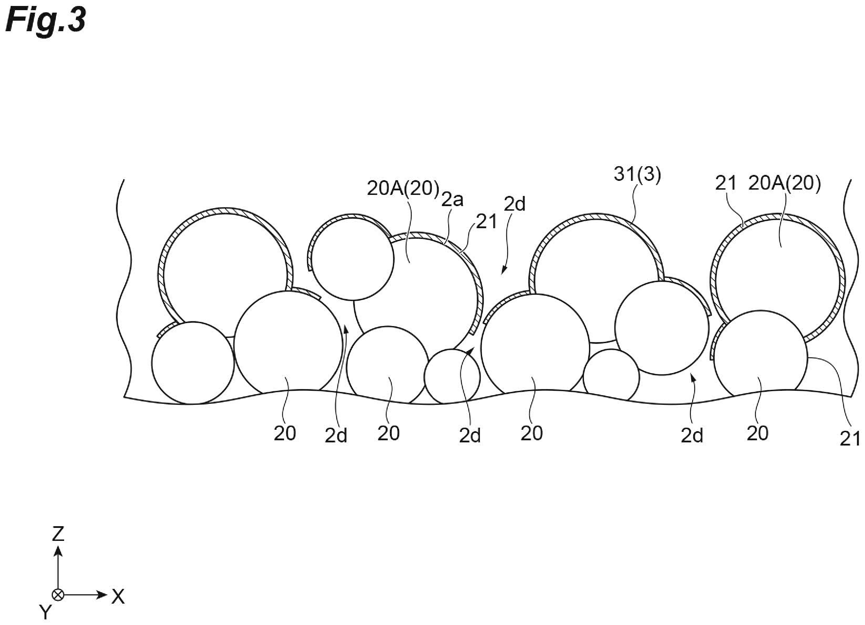

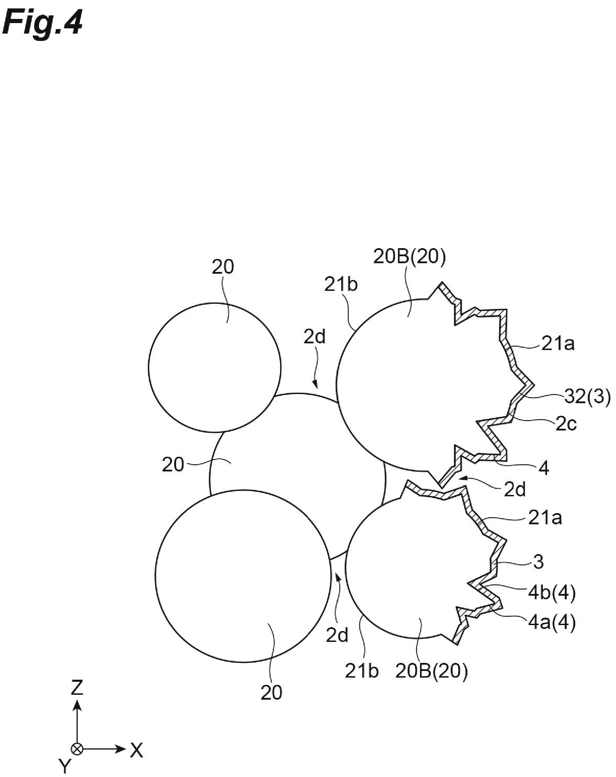

As shown in FIGS. 3 and 4, the substrate 2 includes voids 2d distributed so as to open to at least the first surface 2a and the side surface 2c. That is, the first surface 2a and the side surface 2c communicate with each other via the voids 2d inside the substrate 2. The voids 2d have, for example, a structure that enters the substrate 2 from one inlet (opening) of the first surface 2a or the side surface 2c and branches into a plurality of paths, or a structure that enters the substrate 2 from a plurality of inlets (openings) of the first surface 2a or the side surface 2c and merges into one path. In the present embodiment, the voids 2d are irregularly distributed in the substrate 2. That is, the voids 2d have a structure different from a regular structure configured by a plurality of pores extending along a specific one direction. As an example, the substrate 2 is formed of a plurality of particles 20 connected to each other, and the voids 2d are formed by spaces between the particles 20 adjacent to each other.

As an example of the substrate 2, a structure in which a plurality of particles 20 are joined or bonded to each other can be given. For example, the plurality of particles 20 are joined to each other by fusion so that a state of being in contact with and connected to each other is maintained. The diameter of the particles 20 is, for example, about several tens of µm. There may be some variation in the shape or size (diameter) of each particle 20. In the present embodiment, the particles 20 are formed of an insulating material. As an example, the particles 20 are formed of glass, ceramic, or the like. From the viewpoint of facilitating the manufacture of a structure in which a plurality of particles 20 are joined by fusion, soda glass having a relatively low melting point among glasses may be used as the material of the particles 20. In addition, the particles 20 are formed in a substantially spherical shape. Examples of such substantially spherical particles 20 include glass beads and the like.

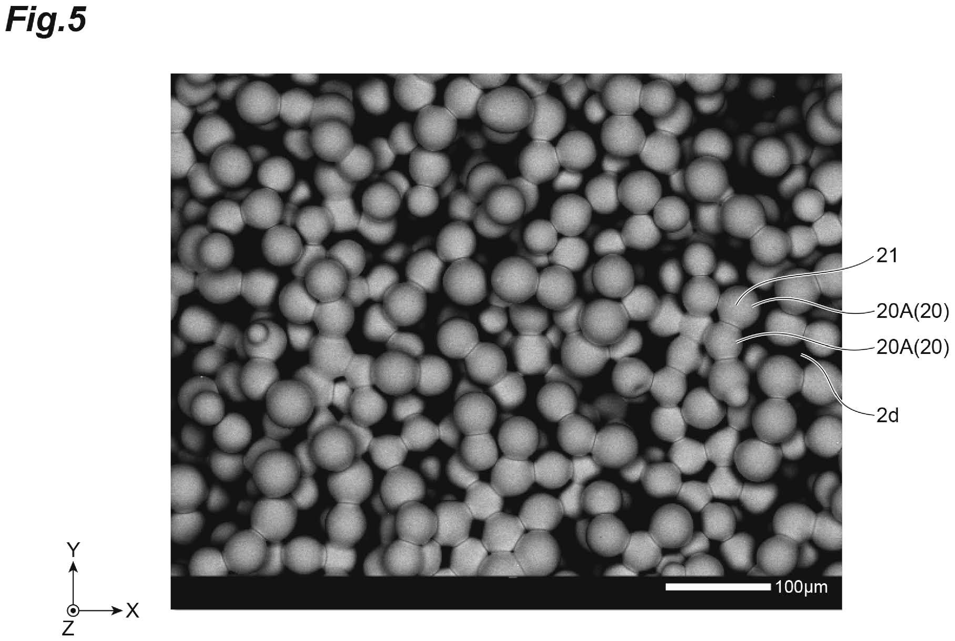

As shown in FIGS. 3 and 5, the first surface 2a is configured by surfaces 21 on one side of a plurality of particles 20A located in an outermost layer on the one side in the Z-axis direction among the plurality of particles 20. Note that FIG. 5 is an SEM image of the first surface 2a (a partial region A as shown in FIG. 1) of the substrate 2 in a state before the conductive layer 3 is provided. In the present embodiment, the surface 21 of the particles 20A constituting the first surface 2a is a smooth surface (non-rough surface), unlike an outer surface (rough surface 21a) of side surface particles 20B described later.

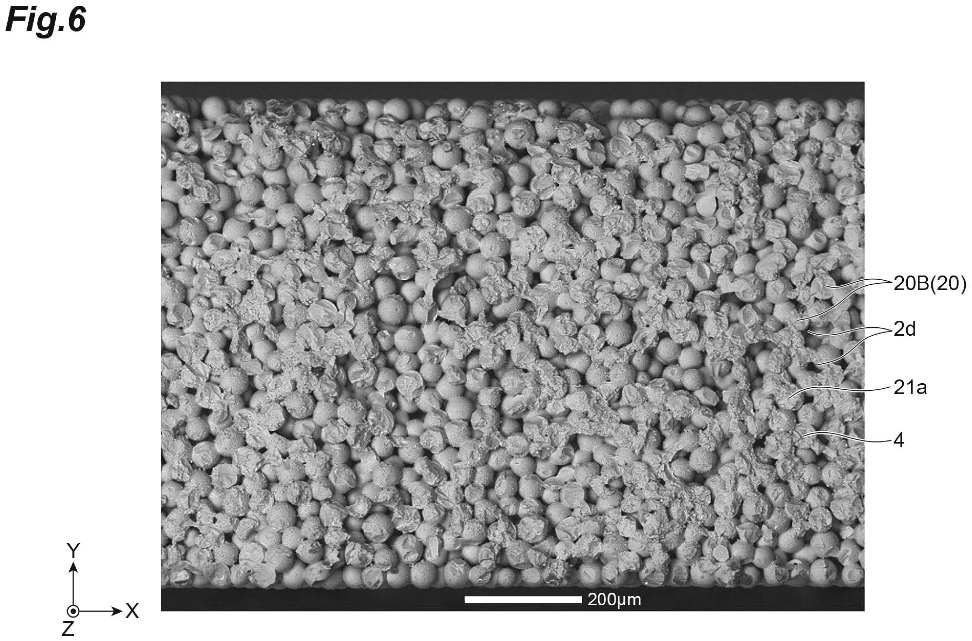

As shown in FIGS. 4 and 6, the side surface 2c is configured by outer surfaces (surfaces facing outward when viewed from the Z-axis direction) of a plurality of side surface particles 20B located in an outermost layer in the X-axis direction or the Y-axis direction among the plurality of particles 20. Among the plurality of side surface particles 20B, particles located in the outermost layer on the one side in the Z-axis direction also correspond to the particles 20A described above. Note that FIG. 6 is an SEM image of the side surface 2c (a partial region B as shown in FIG. 1) of the substrate 2 in a state before the conductive layer 3 is provided. An outer surface of at least a part of the plurality of side surface particles 20B is a rough surface 21a including a fine uneven structure 4. For example, the uneven structure 4 can be configured by a plurality of convex portions 4a protruding outward (pointed) and a plurality of concave portions 4b recessed inward. The plurality of convex portions 4a and the plurality of concave portions 4b may be formed regularly or irregularly. Note that the uneven structure 4 in the present embodiment is a structure formed on one particle 20 itself, and is not an uneven structure generated by arranging a plurality of particles 20 adjacent to each other (for example, an uneven structure in which a groove portion between adjacent particles 20 is regarded as a concave portion).

The rough surface 21a can be formed by various known roughening treatments for roughening the outer surface of the side surface particles 20B. Examples of the roughening treatment include a sandblasting treatment, a laser processing treatment, etching (dry etching), a molding treatment using a mold, and the like. As an example, the substrate 2 can be formed by cutting a base substrate (a porous substrate having an area larger than the substrate 2 when viewed from the Z-axis direction) formed of an aggregate of a plurality of particles 20, but the rough surface 21a may be formed along with a cutting step of cutting the base substrate using a cutting method such as blade dicing, water jet processing, or laser cutting. The base substrate described above is, for example, a sintered body of a plurality of particles 20. As an example, in a state where the plurality of particles 20 are pressed and compacted by a press machine or the like, by heating at a high temperature equal to or lower than the melting point of the particles 20, the surfaces of the plurality of particles 20 are fused to each other, and a sintered body (base substrate) consisting of the plurality of particles 20 is obtained. In the present embodiment, since the particles 20 are formed of an insulating material, the base substrate has insulating properties.

As shown in FIG. 4, the side surface particles 20B have a non-rough surface 21b on which the uneven structure 4 is not formed on a side opposite to the rough surface 21a. That is, an outer surface of the side surface particles 20B is the rough surface 21a as described above, but an inner surface of the side surface particles 20B is a smooth surface (non-rough surface 21b) similar to the surface 21 of the particles 20A constituting the first surface 2a.

The conductive layer 3 is provided on the surface of the substrate 2. As shown in FIGS. 1 and 2, in the present embodiment, the conductive layer 3 is provided so as to cover the first surface 2a and the side surface 2c. That is, by covering the first surface 2a and the side surface 2c of the substrate 2 formed of the insulating base substrate as described above with the conductive layer 3 to provide conductivity, a structure capable of applying a specific voltage to the first surface 2a and the side surface 2c of the substrate 2 is realized. In addition, the conductive layer 3 is not provided in portions corresponding to the four corners of the first surface 2a. That is, the conductive layer 3 is not provided at the four corners of the first surface 2a, and regions where the first surface 2a of the substrate 2 (the surface 21 of the particles 20A) is exposed are provided. In other words, almost the entire surface excluding the portions corresponding to the four corners of the first surface 2a is covered with the conductive layer 3. In addition, the side surface 2c covered with the conductive layer 3 is arranged so as to surround the first surface 2a covered with the conductive layer 3, and the conductive layer 3 on the first surface 2a and the conductive layer 3 on the side surface 2c are electrically connected. Thereby, almost the entire surface of the first surface 2a has the same potential, and the side surface 2c surrounding the first surface 2a also has the same potential as the first surface 2a, so that the potential of the first surface 2a can be stabilized.

As shown in FIG. 3, the conductive layer 3 has a first conductive region 31 provided on the first surface 2a so as not to block the openings of the voids 2d on the first surface 2a. For example, the first conductive region 31 is provided so as not to completely cover the openings of the voids 2d on the first surface 2a by being formed into a film along the surface 21 of each particle 20A. That is, the first conductive region 31 is provided so as not to block the voids 2d when viewed from the Z-axis direction, while being continuously formed on the first surface 2a of each particle 20A. Thereby, a part of the sample S (for example, an excess liquid component) transferred to the first surface 2a can penetrate into the inside of the substrate 2.

As shown in FIG. 4, the conductive layer 3 has a second conductive region 32 provided on the side surface 2c so as not to block the openings of the voids 2d on the side surface 2c. For example, the second conductive region 32 is provided so as not to completely cover the openings of the voids 2d on the side surface 2c by being formed into a film along the surface (rough surface 21a) of each side surface particle 20B. That is, the second conductive region 32 is provided so as not to block the voids 2d when viewed from the X-axis direction or the Y-axis direction, while being continuously formed on the surface of each side surface particle 20B. The second conductive region 32 is connected to the first conductive region 31. That is, the second conductive region 32 is formed continuously with the first conductive region 31. The second conductive region 32 is provided along the surface shape of the uneven structure 4 on the rough surface 21a of the plurality of side surface particles 20B. That is, the thickness of the second conductive region 32 is made very thin with respect to the size (diameter) of the side surface particles 20B. Thereby, the shape of the outer surface of the conductive layer 3 formed on the surface of the side surface particles 20B follows the surface shape (uneven shape) of the uneven structure 4. Therefore, as shown in FIG. 4, even in a state after the conductive layer 3 is formed, the uneven shape of the side surface 2c (that is, the uneven shape of the rough surface 21a of each side surface particle 20B) is maintained.

The conductive layer 3 is formed of a conductive material. As a material of the conductive layer 3, it is preferable to use a metal having low affinity (reactivity) with the sample to be analyzed and high conductivity. From such a viewpoint, as the material of the conductive layer 3, for example, Au (gold), Pt (platinum), or the like is preferably used. The conductive layer 3 is formed to a thickness of about 1 nm to 350 nm by, for example, a plating method, an atomic layer deposition (ALD) method, a vapor deposition method, a sputtering method, or the like. Note that, as the material of the conductive layer 3, for example, Cr (chromium), Ni (nickel), Ti (titanium), or the like may be used.

The conductive layer 3 is formed of a conductive material. As a material of the conductive layer 3, it is preferable to use a metal having low affinity (reactivity) with the sample and high conductivity. From such a viewpoint, as the material of the conductive layer 3, for example, Au (gold), Pt (platinum), or the like is preferably used. The conductive layer 3 is formed to a thickness of about 1 nm to 350 nm by, for example, a plating method, an atomic layer deposition (ALD) method, a vapor deposition method, a sputtering method, or the like. Note that, as the material of the conductive layer 3, for example, Cr (chromium), Ni (nickel), Ti (titanium), or the like may be used.

### [Mass Spectrometry Method]

An example of a mass spectrometry method using the sample support 1 (a method using a laser desorption/ionization method) will be described. A mass spectrometry method using an example of a mass spectrometer (mass spectrometer 10) will be described with reference to FIGS. 7 and 8. First, the sample support 1 is prepared (first step). Subsequently, the sample S is arranged (transferred) on the first surface 2a of the substrate 2 (second step). The sample S is, for example, a slice of a fruit (strawberry or the like). For example, by pressing the sample S against the first surface 2a of the substrate 2, the sample S (a part of the sample S) is attached onto the first surface 2a.

Subsequently, after the sample S is attached to the first surface 2a, components (molecules) of the sample S are ionized by irradiating the first surface 2a with an energy ray while applying a voltage to the first surface 2a (conductive layer 3) (third step). The third step described above can be performed, for example, by using the mass spectrometer 10 shown in FIG. 8. The mass spectrometer 10 includes a support unit 12, an irradiation unit 13, a voltage application unit 14, an ion detection unit 15, a camera 16, a control unit 17, and a sample stage 18.

As shown in FIGS. 7 and 8, as an example, the sample support 1 is fixed onto the support substrate 8 via a conductive tape 9 in a state where the second surface 2b of the substrate 2 is placed on a support surface 8a of the support substrate 8. In a state where the sample support 1 is fixed onto the support substrate 8 in this manner, the support substrate 8 is placed on the support unit 12. As shown in FIG. 7, as an example, the conductive tape 9 is provided at a central portion in the transverse direction (Y-axis direction) of both side edges in the longitudinal direction (X-axis direction) of the substrate 2, and is arranged across a part of the first conductive region 31 on the first surface 2a, a part of the second conductive region 32 on the side surface 2c, and the support surface 8a of the support substrate 8. Thereby, the conductive layer 3 is electrically connected to the support surface 8a of the support substrate 8 via the conductive tape 9. The support substrate 8 is, for example, a slide glass. As an example, the support substrate 8 is a glass substrate (ITO slide glass) on which a transparent conductive film such as an ITO (Indium Tin Oxide) film is formed, and a surface of the transparent conductive film is the support surface 8a. That is, in the present embodiment, the entire support surface 8a has conductivity.

The irradiation unit 13 irradiates the first surface 2a of the sample support 1 with an energy ray such as a laser beam L. The voltage application unit 14 applies a voltage to the first surface 2a of the sample support 1. The ion detection unit 15 detects components of the ionized sample (sample ions SI). The camera 16 acquires a camera image including an irradiation position of the laser beam L by the irradiation unit 13. The camera 16 is, for example, a small CCD camera attached to the irradiation unit 13. The control unit 17 controls operations of the sample stage 18, the camera 16, the irradiation unit 13, the voltage application unit 14, and the ion detection unit 15. The control unit 17 is, for example, a computer device including a processor (for example, a CPU or the like), a memory (for example, a ROM, a RAM, or the like), and the like.

A voltage is applied to the support surface 8a of the support substrate 8 by the voltage application unit 14. Thereby, a voltage is applied to the conductive layer 3 via the support surface 8a and the conductive tape 9. Subsequently, the control unit 17 operates the irradiation unit 13 based on the camera image acquired by the camera 16. Specifically, the control unit 17 operates the irradiation unit 13 so that the laser beam L is irradiated to a laser irradiation range (for example, the entire substrate 2 specified based on the camera image).

As an example, the control unit 17 moves the sample stage 18 and controls an irradiation operation (irradiation timing or the like) of the laser beam L by the irradiation unit 13. That is, after confirming that the sample stage 18 has moved by a predetermined interval, the control unit 17 causes the irradiation unit 13 to execute irradiation of the laser beam L. For example, the control unit 17 repeats movement (scanning) of the sample stage 18 and irradiation of the laser beam L by the irradiation unit 13 so as to raster-scan within the laser irradiation range. Note that the change of the irradiation position with respect to the first surface 2a may be performed by moving the irradiation unit 13 instead of the sample stage 18, or may be performed by moving both the sample stage 18 and the irradiation unit 13.

By the third step described above, the components of the sample S on the first surface 2a are ionized, and the sample ions SI are emitted. Specifically, energy is transmitted from the conductive layer 3 that has absorbed the energy of the laser beam L to the components of the sample S on the first surface 2a, and the components that have acquired the energy are vaporized and acquire charges to become the sample ions SI. The emitted sample ions SI move while accelerating toward a ground electrode (not shown) provided between the sample support 1 and the ion detection unit 15. That is, the sample ions SI move while accelerating toward the ground electrode due to a potential difference generated between the conductive layer 3 to which the voltage is applied and the ground electrode. Then, the sample ions SI are detected by the ion detection unit 15 (fourth step).

The first to third steps described above correspond to an ionization method using the sample support 1. In addition, the first to fourth steps described above correspond to a mass spectrometry method using the sample support 1. In addition, by mapping the intensity of the sample ions SI detected in the fourth step for each irradiation position of the laser beam L, an MSI image showing a two-dimensional distribution of sample molecules can be obtained. Thereby, mass spectrometry imaging (MSI) can be performed.

### [Effects]

In the sample support 1, as shown in FIGS. 3 and 5, the substrate 2 includes the voids 2d opening to the first surface 2a. Thereby, when the sample S is introduced to the first surface 2a of the substrate 2 (in the present embodiment, the first conductive region 31 on the first surface 2a; the same applies hereinafter), the sample S appropriately diffuses into the voids 2d of the substrate 2, and the amount of the sample S remaining on the first surface 2a is appropriately adjusted. As a result, the sample S remaining on the first surface 2a can be suitably ionized.

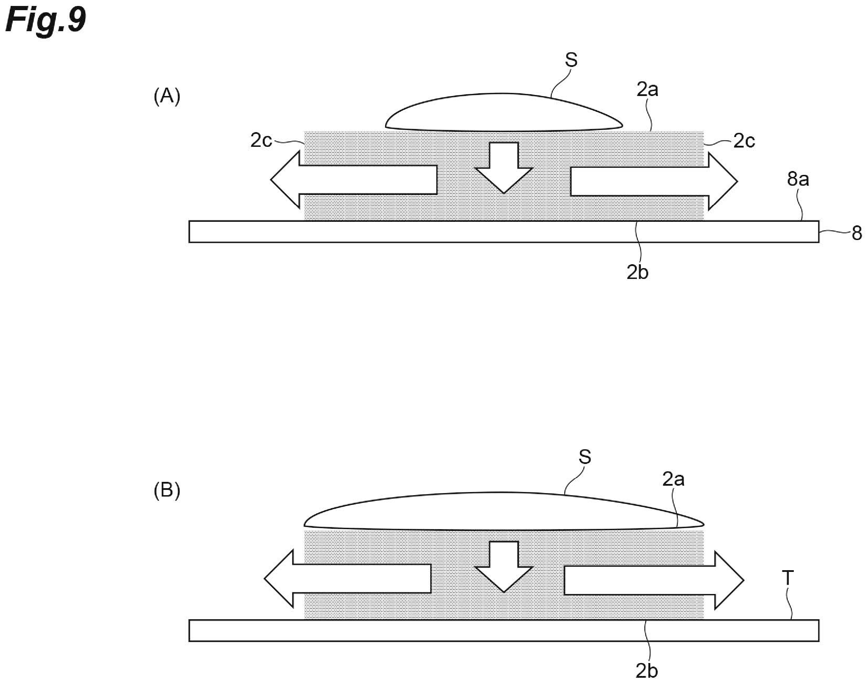

In addition, as shown in FIGS. 4 and 6, the voids 2d of the substrate 2 also open to the side surface 2c. That is, the first surface 2a and the side surface 2c communicate with each other via the voids 2d inside the substrate 2. Thereby, for example, when the sample support 1 in which the sample S is transferred to the first surface 2a of the sample support 1 is introduced into a vacuum apparatus (a part of the mass spectrometer 10 described above), degassing of the substrate 2 (that is, discharging of the gas accumulated in the voids 2d from the side surface 2c) can be suitably performed. That is, as shown in (A) of FIG. 9, since the side surface 2c is not blocked, the gas accumulated inside the substrate 2 can be discharged to the outside from the side surface 2c, so that the speed of degassing work (vacuum reaching speed) can be improved. Furthermore, since gas is less likely to remain inside the substrate 2, it is possible to suppress the detection of the sample ions SI by the ion detection unit 15 from being hindered by the residual gas in the ionization step (third step) described above.

In addition, as shown in (B) of FIG. 9, even when the sample S is transferred to the entire first surface 2a, the gas introduced from the first surface 2a into the inside of the substrate 2 can escape from the opening of the side surface 2c, so that it is possible to suppress accumulation of extra gas (residual gas) inside the substrate 2, and consequently suppress occurrence of transfer unevenness caused by the residual gas. Supplementally, as shown in (B) of FIG. 9, during the transfer of the sample S, the second surface 2b may not be exposed to the outside by providing a protective tape T or the like on the second surface 2b. Therefore, even if the voids 2d inside the substrate 2 communicate from the first surface 2a to the second surface 2b, if the side surface 2c is blocked, there is no escape route for the gas introduced from the first surface 2a into the inside of the substrate 2 during the transfer. In contrast, in the sample support 1, since the voids 2d are configured to open also to the side surface 2c as described above, even when the sample S is transferred to the entire first surface 2a, degassing during the transfer can be suitably performed. In addition, when a plurality of sample supports 1 are used side by side in the X-axis direction or the Y-axis direction (for example, when the size of the sample S to be analyzed does not fit within the measurement surface (first surface 2a) of one sample support 1), the continuity of the adjacent sample supports 1 (substrates 2) can be maintained because the side surface 2c of the substrate 2 of each sample support 1 is open.

Furthermore, an outer surface of at least a part of the side surface 2c of the substrate 2 is a rough surface 21a on which the uneven structure 4 is formed. Thereby, for example, when an operator holds the side surface 2c of the substrate 2 with fingers, or when the side surface of the substrate 2 is held using an instrument for supporting the sample support 1, the rough surface 21a (uneven structure 4) exhibits an anti-slip function, so that the handling property of the sample support 1 can be improved. As described above, according to the sample support 1, it is possible to achieve high accuracy in analysis and improve handling property.

As shown in FIG. 4, the side surface particles 20B have a non-rough surface 21b on which the uneven structure 4 is not formed on a side opposite to the rough surface 21a. By making the inner surface of the side surface particles 20B the non-rough surface 21b, sufficient bonding strength between the side surface particles 20B and the particles 20 located inside the side surface particles 20B can be secured, and spilling of the side surface particles 20B or the like can be suppressed. In addition, by not providing the uneven structure 4 inside the side surface particles 20B, compared to a case where the uneven structure 4 is also formed inside the side surface particles 20B, gas flow (for example, the above-described residual gas flow) inside the side surface particles 20B can be smoothed, and consequently degassing from the opening of the side surface 2c can be suitably performed.

On the rough surface 21a of the side surface particles 20B, a substance that emits ions in response to being irradiated with the laser beam L (hereinafter referred to as a "specific substance") is disposed. Examples of the specific substance include a metal film, a substance having light absorbency (for example, an organic material that absorbs ultraviolet light, a dye, or the like), and the like. In the present embodiment, as shown in FIG. 4, the conductive layer 3 (second conductive region 32) is disposed on the rough surface 21a. Since the conductive layer 3 is a metal film, it corresponds to the specific substance. According to the sample support 1, in an imaging result (the above-described MSI image) obtained by irradiating the entire first surface 2a of the sample support 1 (the whole including the side surface 2c when viewed from the Z-axis direction) with the laser beam L, ionizing components (molecules) of the sample S present on the first surface 2a, and performing mass spectrometry imaging (MSI) that two-dimensionally visualizes a spatial distribution of the ionized components, a portion corresponding to the side surface 2c of the substrate 2 (that is, an outer edge of the sample support 1) can be clarified. More specifically, since the rough surface 21a is provided with the uneven structure 4 (edge structure), the energy of the laser beam L is easily absorbed by an edge portion of the rough surface 21a. As a result, components of the specific substance (in the present embodiment, a part of the conductive layer 3 (second conductive region 32)) on the surface of the edge portion are suitably ionized and easily desorbed, and as a result, a location corresponding to the outer edge of the sample support 1 can be easily and accurately recognized in the MSI image.

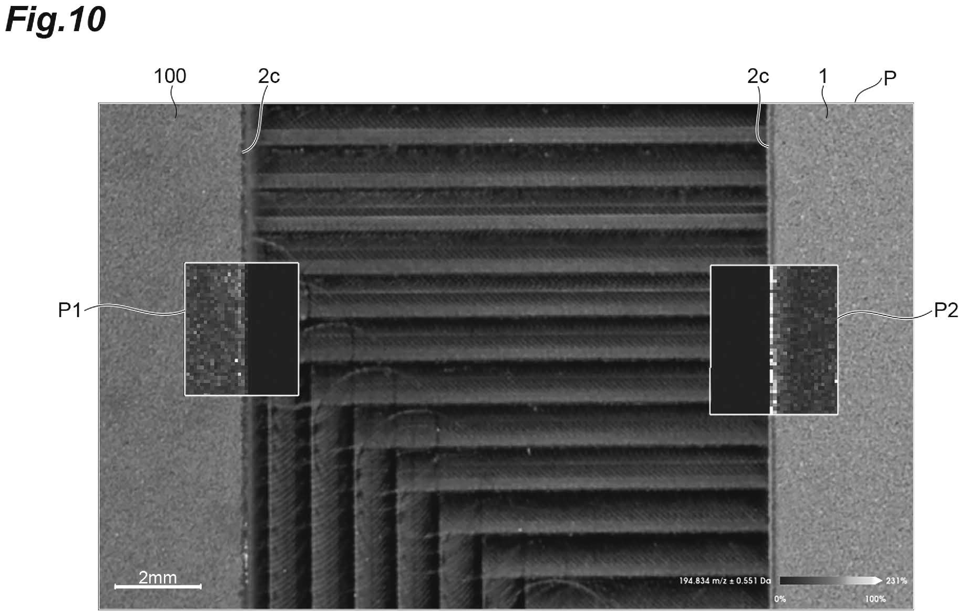

The above effects will be supplemented with reference to FIG. 10. In FIG. 10, an entire image P is a part of a camera image (scanned image) obtained by a camera (for example, the camera 16 of the mass spectrometer 10 described above). The image P is an image obtained by arranging a sample support 100 of a comparative example and the sample support 1 of an example side by side on a predetermined support plate (a black plate having a plurality of groove portions shown in a central portion of the image P), and photographing a part of one outer edge (a portion including the side surface 2c) of the comparative example and a part of one outer edge (a portion including the side surface 2c) of the example. The sample support 100 of the comparative example is different from the sample support 1 in that the outer surface of the side surface particles 20B is a smooth surface similar to the surface 21 of the particles 20A (that is, the rough surface 21a like the side surface particles 20B of the sample support 1 is not formed).

In FIG. 10, partial images P1 and P2 arranged so as to be superimposed on the image P show imaging results (a part of the MSI image) at corresponding locations. That is, the image P1 shows a part of the MSI image of a portion including the outer edge (side surface 2c) of the comparative example (sample support 100). The image P2 shows a part of the MSI image of a portion including the outer edge (side surface 2c) of the example (sample support 1). As shown in the images P1 and P2 of FIG. 10, it was confirmed that a higher signal intensity was obtained at the outer edge (side surface 2c) of the sample support (substrate 2) in the example (image P2) than in the comparative example (image P1). That is, it was confirmed that by making the outer surface of the side surface particles 20B the rough surface 21a, the image P2 in which the clarity of the outer edge of the sample support 1 is higher than that of the image P1 can be obtained. Thereby, the position of the outer edge (boundary line corresponding to the side surface 2c) of the sample support 1 in the MSI image can be easily and accurately grasped. As a result, for example, alignment between the camera image (image P) and the MSI image (image including the image P2) can be easily and accurately performed, and high accuracy in analysis (mass spectrometry imaging) can be achieved.

As shown in FIG. 4, the second conductive region 32 is provided along the surface shape of the uneven structure 4 on the rough surface 21a of at least a part of the plurality of side surface particles 20B. For example, when ionizing the components of the sample S remaining on the first surface 2a by the laser desorption/ionization method or the like as described above, it is necessary to apply a voltage to the conductive layer 3 (first conductive region 31) on the first surface 2a. In order to stably apply a voltage to the first conductive region 31, it is preferable to apply a voltage also to the side surface 2c, and it is preferable to provide the second conductive region 32 on the side surface 2c. Then, since the second conductive region 32 is provided along the surface shape of the uneven structure 4 on the rough surface 21a of at least a part of the plurality of side surface particles 20B, the above-described effect (clarification of the outer edge of the sample support 1 in the MSI image) can be obtained. In addition, as a configuration for applying a voltage to the first conductive region 31, a configuration is conceivable in which the sample support 1 is placed on a conductive sample stage (in the present embodiment, the support substrate 8), and the support substrate 8 and the conductive layer 3 of the sample support 1 are connected by the conductive tape 9, whereby a voltage is applied to the conductive layer 3 via the support substrate 8 and the conductive tape 9. According to the sample support 1, when such a configuration is adopted, by providing the conductive tape 9 so as to cover the conductive layer 3 on the rough surface 21a of the side surface particles 20B (that is, a portion of the second conductive region 32 having the same surface shape as the uneven structure 4 of the rough surface 21a of the side surface particles 20B), an anchor effect by the uneven structure 4 can be exhibited, and an adhesive force of the conductive tape 9 to the second conductive region 32 can be increased. Thereby, a voltage can be stably and reliably applied to the conductive layer 3.

A thickness (average thickness) of the conductive layer 3 in the second conductive region 32 may be smaller than a thickness (average thickness) of the conductive layer 3 in the first conductive region 31. For example, an amount (film formation amount) of the second conductive region 32 per unit area may be smaller than an amount (film formation amount) of the first conductive region 31 per unit area. For example, when the conductive layer 3 is formed by vapor deposition, the conductive layer 3 may be formed such that "thickness of second conductive region 32 < thickness of first conductive region 31" by making a direction of vapor deposition with respect to the first surface 2a different from a direction of vapor deposition with respect to the side surface 2c. According to the above configuration, by securing a constant thickness for the first conductive region 31 on the first surface 2a, a voltage can be stably applied to the first surface 2a during analysis. On the other hand, for the second conductive region 32 on the side surface 2c, by reducing the thickness of the conductive layer 3, the above effects (that is, improvement of the adhesive force of the conductive tape 9 to the second conductive region 32 due to the anchor effect, and clarification of the outer edge of the sample support 1 in the MSI image) can be obtained even more suitably.

As shown in FIGS. 1 and 7, the first surface 2a of the substrate 2 has a rectangular shape, and the conductive layer 3 is not provided in portions corresponding to the four corners of the first surface 2a. In the present embodiment, as an example, regions where the first surface 2a is exposed in a triangular shape are provided at the four corners of the first surface 2a. By not providing the conductive layer 3 in the portions corresponding to the four corners of the first surface 2a, it becomes easy to visually distinguish a portion where the conductive layer 3 is provided on the first surface 2a (that is, the first conductive region 31) from the portions corresponding to the four corners of the first surface 2a. Thereby, for example, when aligning the sample stage 18 in a state where the sample support 1 is placed on the sample stage 18 of the mass spectrometer 10, the alignment can be facilitated by using the portions corresponding to the four corners of the first surface 2a as marks.

As shown in FIGS. 2 and 8, the side surface 2c includes an inclined region that inclines so as to spread outward from the first surface 2a toward the second surface 2b. According to the above configuration, it is possible to improve the stability of the sample support 1 when the sample support 1 is placed on a sample stage or the like (in the present embodiment, the support substrate 8) during analysis. In addition, when the conductive tape 9 as described above is provided so as to cover the edge of the first surface 2a, the inclined region of the side surface 2c, and the upper surface (support surface 8a) of the support substrate 8, adhesion between the conductive tape 9 and the sample support 1 can be enhanced. That is, since it is possible to suppress a gap from being generated between the conductive tape 9 and the side surface 2c and the support surface 8a of the sample support 1, the sample support 1 can be stably fixed to the support surface 8a, and peeling of the conductive tape 9 can be suppressed. In addition, by inclining the side surface 2c as described above, the laser beam L easily hits the rough surface 21a of the side surface particles 20B in the laser desorption/ionization method described above, so that the above-described effect described with reference to FIG. 10 (that is, clarification of the outer edge of the sample support 1 in the MSI image) can be more suitably obtained.

### [Modifications]

The present disclosure is not limited to the embodiments described above. Various materials and shapes can be adopted for the material and shape of each component, not limited to the materials and shapes described above. In addition, some of the configurations included in the sample support 1 according to the above embodiment may be omitted or changed as appropriate. For example, in the above embodiment, some characteristic configurations included in the sample support 1 and some effects exhibited by each configuration have been described, but the sample support according to the present disclosure does not necessarily have to be configured to exhibit all the effects described in the above embodiment, and may be configured to exhibit only some of the effects described in the above embodiment. In the latter case, the sample support only needs to be provided with a configuration essential for exhibiting that part of the effects, and a configuration not essential for exhibiting that part of the effects may be omitted or changed as appropriate. Hereinafter, some modifications of the sample support of the present disclosure will be exemplified.

In the above embodiment, glass, ceramic, or the like is exemplified as the material of the particles 20, but the particles 20 may be formed of a conductive material (for example, a metal such as aluminum). In this case, the conductive layer 3 in the above embodiment can be omitted.

In the above embodiment, since the ionization method by the laser desorption/ionization method was used, the conductive layer 3 was provided on the surface of the insulating substrate 2 in order to impart conductivity to the sample support 1, but when conductivity is not required for the sample support 1 (or when electrical insulation is required), the conductive layer 3 may be omitted. In this case, the sample support 1 can be used for a desorption electrospray ionization (DESI) method or the like in which the first surface 2a of the substrate 2 is irradiated with charged micro-droplets.

In the above embodiment, since the substrate 2 is configured by an aggregate of a plurality of particles 20 (sintered body of glass beads) as shown in FIGS. 5 and 6, the voids 2d open to the first surface 2a and the side surface 2c, and also open to the second surface 2b, but the voids 2d do not have to open to the second surface 2b. For example, the substrate 2 may be configured by a flat plate including the second surface 2b, and a porous structure (that is, a plurality of particles 20) provided on a surface of the plate opposite to the second surface 2b. As an example, the substrate 2 may be configured by a glass plate and a porous structure provided on the glass plate.

In the above embodiment, as shown in FIG. 6, the outer surface of the side surface particles 20B in substantially the entire region constituting the side surface 2c (outermost surface when viewed from the Z-axis direction) is the rough surface 21a including the uneven structure 4, but the outer surface of the side surface particles 20B in substantially the entire region does not necessarily have to be the rough surface 21a. That is, an outer surface of at least a part of the plurality of side surface particles 20B constituting the side surface 2c only needs to be the rough surface 21a. For example, only the outer surface of the side surface particles 20B belonging to a partial range on the first surface 2a side (a partial region continuous with the first surface 2a) of the side surface 2c may be the rough surface 21a.

In the above embodiment, as shown in FIG. 2, the entire side surface 2c is formed as an inclined region that inclines so as to spread outward from the first surface 2a toward the second surface 2b, but only a part of the side surface 2c (for example, a part on a side connected to the first surface 2a) may be inclined. In addition, it is not essential that the side surface 2c includes an inclined region. For example, the side surface 2c may be formed so as to extend along a direction (Z-axis direction) perpendicular to the first surface 2a and the second surface 2b.

In the above embodiment, the conductive layer 3 continuously provided on the first surface 2a and the side surface 2c was used as the specific substance, but in a case where the conductive layer 3 itself is omitted as described above, a specific substance different from the conductive layer 3 may be disposed (for example, formed into a film) on the rough surface 21a only for the purpose of obtaining the effect described with reference to FIG. 10 (clarification of the outer edge of the sample support 1 in the MSI image). Alternatively, at least a part of the plurality of side surface particles 20B (for example, the side surface particles 20B themselves) may be formed of the specific substance. In this case, the side surface particles 20B themselves are ionized. Even with such a configuration, an MSI image in which the outer edge of the sample support 1 is clarified can be obtained.

The shape of the particles 20 is not limited to a substantially spherical shape, and may have a shape other than a substantially spherical shape.

In the above embodiment, an example in which the sample support 1 is used for a mass spectrometry method has been shown, but the sample support 1 can be used for various analysis applications including ionization of a sample other than mass spectrometry. In addition, the application of the sample support 1 is not limited to ionization of a sample by irradiation with the laser beam L such as the laser desorption/ionization method shown in the above embodiment. The sample support 1 can also be used for ionization of a sample by irradiation with an energy ray other than a laser beam. For example, the sample support 1 can also be used for ionization of a sample by electrospray or irradiation with an energy ray such as an ion beam or an electron beam. In the ionization method and the mass spectrometry method described above, a sample can be ionized by irradiation with such an energy ray.

### Reference Signs List

1: sample support, 2: substrate (porous substrate), 2a: first surface, 2b: second surface, 2c: side surface, 2d: void, 3: conductive layer, 4: uneven structure, 20, 20A: particle, 20B: side surface particle, 21: surface, 21a: rough surface, 21b: non-rough surface, 31: first conductive region, 32: second conductive region, L: laser beam (energy ray), S: sample.

## Claims

1. A sample support for ionizing a sample, comprising:
a porous substrate having a first surface, a second surface opposite to the first surface, a side surface connecting an edge of the first surface and an edge of the second surface, and voids distributed so as to open to at least the first surface and the side surface,
wherein the porous substrate is formed of a plurality of particles connected to each other, and
an outer surface of at least a part of a plurality of side surface particles constituting the side surface among the plurality of particles is a rough surface on which an uneven structure is formed.

2. The sample support according to claim 1, wherein at least a part of the plurality of side surface particles has a non-rough surface on which the uneven structure is not formed on a side opposite to the rough surface.

3. The sample support according to claim 1 or 2, wherein at least a part of the plurality of side surface particles is formed of a substance that emits ions in response to being irradiated with an energy ray.

4. The sample support according to any one of claims 1 to 3, wherein a substance that emits ions in response to being irradiated with an energy ray is disposed on the rough surface of at least a part of the plurality of side surface particles.

5. The sample support according to any one of claims 1 to 4, further comprising a conductive layer provided on a surface of the porous substrate,
wherein the conductive layer includes a first conductive region provided on the first surface so as not to block the openings of the voids on the first surface, and a second conductive region connected to the first conductive region and provided on the side surface so as not to block the openings of the voids on the side surface, and
the second conductive region is provided along a surface shape of the uneven structure on the rough surface of at least a part of the plurality of side surface particles.

6. The sample support according to claim 5, wherein a thickness of the conductive layer in the second conductive region is smaller than a thickness of the conductive layer in the first conductive region.

7. The sample support according to claim 5 or 6, wherein the first surface has a rectangular shape, and the conductive layer is not provided in portions corresponding to four corners of the first surface.

8. The sample support according to any one of claims 1 to 7, wherein the side surface includes an inclined region that inclines so as to spread outward from the first surface toward the second surface.
